# EUROPEAN PATENT SPECIFICATION

(11) **EP 0 353 837 B1**
(45) Date of publication and mention of the grant of the patent: **27.07.1994**
(21) Application number: 89303952.9
(22) Date of filing: 20.04.1989
(51) Int. Cl.: H01M 4/52, H01M 4/32, H01M 10/30

(54) **A nickel electrode for an alkaline battery**
Nickelelektrode für eine alkalische Batterie
Electrode en nickel pour une batterie alcaline

(30) Priority: 19.07.1988 JP 180047/88; 18.10.1988 JP 262047/88
(43) Date of publication of application: 07.02.1990
(73) Proprietor: YUASA CORPORATION, Takatsuki-shi, Osaka 569 (JP)
(72) Inventor: Oshitani, Masahiko, Takatsuki-shi Osaka (JP); Yufu, Hiroshi, Takatsuki-shi Osaka (JP); Hasegawa, Kiichi, Takatsuki-shi Osaka (JP)
(74) Representative: Linn, Samuel Jonathan

(56) References cited:
- FR-A- 2 372 515
- US-A- 3 826 684
- US-A- 4 399 005
- JOURNAL OF POWER SOURCES, vol. 12, 1984, pages 219-231, Elsevier Sequoia, NL; M. OSHITANI et al.: "Development of a nickel electrode having stable performance at various charge and discharge rates over a wide temperature range"
- JOURNAL OF APPLIED ELECTROCHEMISTRY, vol. 16, 1986, pages 403-412, Chapman and Hall Ltd; M. OSHITANI et al.: "A study on the swelling of a sintered nickel hydroxide electrode"
- CHEMICAL ABSTRACTS, vol. 106, no. 2, 12th January 1987, page 150, abstract no. 7550v, Columbus, Ohio, US; & JP-A-61 183 868 (YUASA BATTERY CO. LTD) 16-08-1986
- CHEMICAL ABSTRACTS, vol. 105, no. 16, 20th October 1986, page 195, abstract no. 137107w, Columbus, Ohio, US; & JP-A-61 124 068 (YUASA BATTERY CO., LTD) 11-06-1986
- PATENT ABSTRACTS OF JAPAN, vol. 6, no. 21 (E-93)[899], 6th February 1982; & JP-A-56 143 671 (SANYO DENKI K.K.) 09-11-1981
- PATENT ABSTRACTS OF JAPAN, vol. 12, no. 89 (E-592)[2936], 23rd March 1988; & JP-A-62 222 566 (YUASA BATTERY CO. LTD) 30-09-1987
- PATENT ABSTRACTS OF JAPAN, vol. 8, no. 231 (E-274)[1668], 24th October 1984; & JP-A-59 112 574 (MATSUSHITA DENKI SANGYO K.K.) 29-06-1984
- PATENT ABSTRACTS OF JAPAN, vol. 8, no. 194 (E-264)[1631], 6th September 1984; & JP-A-59 83 347 (MATSUSHITA DENKI SANGYO K.K.) 14-05-1984
- PATENT ABSTRACTS OF JAPAN, vol. 11, no. 312 (E-548)[2759], 12th October 1987; & JP-A-62 105 369 (SHIN KOBE ELECTRIC MACH. CO. LTD) 15-05-1987
- CHEMICAL ABSTRACTS, vol. 108, no. 12, 21st March 1988, page 210, abstract no. 97899j, Columbus, Ohio, US; & JP-A-62 237 667 (YUASA BATTERY CO., LTD) 17-10-1987

## Description

The present invention relates to a nickel electrode for an alkaline battery, and particularly to active material for the nickel electrode.

Alkaline batteries commonly used are called sintered batteries, and have structures in which nickel hydroxide is loaded in a micro-porous substrate formed of a perforated steel sheet to which nickel powder is sintered. The electrode of this type requires repetition of active material loading processes for several times, resulting in complicated and thus expensive manufacturing process. Further, since the porosity of the substrate is restricted, loading density of the active material, is low, and thus an energy density of the electrode can be approximately 400 mAh/cm³ at most.

In attempt to improve this, electrodes other than that of the sintered type have been broadly developed. In an example of them, graphite powder of about 20 - 30 wt% (weight percentage) is mixed as conductive additive with nickel hydroxide powder coated with cobalt hydroxide, and then, this mixture is formed into a sheet-like shape and is fixedly pressed to a nickel plate to form the electrode. Since the above conductive additive itself does not contribute to capacity of the electrode, it reduces capacity density, and causes generation of a large amount of carbonate due to decomposition of the graphite. Therefore, this electrode can not be used in batteries having small amount of electolyte, such as sealed nickel cadmium batteries. In order to overcome the above disadvantages, manufacturers started to provide pasted nickel electrodes for practical use, in which a metal fiber substrate having a high porosity of about 95% is used. In these electrodes, CoO powder, which forms a conductive network for the active material, is added to the nickel hydroxide powder active material which is produced from nickel sulfate aqueous solution and sodium hydroxide aqueous solution, and viscous aqueous solution of carboxymethyl-cellulose is further added thereto to form a paste, which is loaded into the fiber substrate. This conductive network forms current paths which are more effective than those provided by graphite, does not decompose, and thus does not produce carbonate. This electrode is less expensive than the sintered electrode, and has a high energy density of about 500 mAh/cm³.

However, as weights of portable electronics equipment have recently been reduced, a high energy density of about 600 mAh/cm³ is required in the market. In order to comply with this requirement, the density of the nickel hydroxide powder itself must be increased, because the porosity of the substrate is limited. Nickel hydroxide powder of high density has been used as a part of material for parkerizing steel plates. In the manufacture thereof, nickel nitrate or nickel sulfate is dissolved in weak basic ammonia aqueous solution and is stabilized as tetra-amine-nickel (II) complex ion, and the nickel hydroxide is deposited while adding sodium hydroxide aqueous solution to it. This deposition is slowly performed so as to prevent development of voids in particles.

Since this method does not result in random deposition, as occurs in the conventional method, it can produce nickel hydroxide having good crystallinity with less grain boundary, i.e., less pore volume, and thus a high density.

However, due to its unique characteristics, this powder causes some problem when used as the active material for the battery as it is.

For example, the charge-discharge reaction of the nickel hydroxide electrode is achieved by free movement of protons in the crystals of the nickel hydroxide. However, due to the high density of the nickel hydroxide and thus to the high compactness of the crystal, the free movement of protons in the crystal is restricted. Further, since the current density increases in accordance with the reduction of the specific surface area, a large amount of higher oxide γ-NiOOH may be produced, which may cause fatal phenomena such as stepped discharge characteristics and/or swelling. The swelling due to the production of γ-NiOOH in the nickel electrode is caused by the large change of density from high density β-NiOOH to low density γ-NiOOH. The inventors have already found that the production of γ-NiOOH can effectively be prevented by addition of a small amount of cadmium, zinc or magnesium in solid solution in the nickel hydroxide. This is disclosed in J. Applied Electrochemistry 16 (1986) pp403-412.

It is desirable to achieve the effect by utilizing an additive other than cadmium from the viewpoint of environmental pollution.

It is an object of the invention to provide an active material for a nickel electrode, in which the density of the nickel hydroxide is increased, and the production of γ-NiOOH, which may be caused by the increased density, is prevented by use of a less poisonous additive than cadmium, so that the useful life may be extended and the utilization factor of the active material may be improved. It is also an object of the invention to provide a nickel electrode utilizing said active material and an alkaline battery utilizing said electrode.

According to the invention, active material for a nickel electrode is produced by deposition of crystals of nickel hydroxide including a small amount of zinc or magnesium in solid solution therein from an aqueous sulphate solution thereof to which ammonium sulphate has been added following addition of sodium or potassium hydroxide thereto to bring the pH to between 11 and 13.

Active material produced by this method includes zinc or magnesium in solid solution in the crystaline nickel hydroxide in a range of 3 to 10 wt% or 1 to 3 wt%, respectively.

Furthermore, in active material produced by this method calculations made from the nitrogen adsorption isotherm of said powder indicate that development of pores having a radius of 300nm (30 Å) or more is prevented, and the entire pore volume ratio is controlled at less than 0.05 cm³/g.

Further, according to the invention, a nickel electrode comprises a porous alkaline-proof metal fiber substrate used as a current collector, and a paste, which is loaded into said electrode, a principle component of said paste being active material produced as just specified and/or having the properties just specified.

Generally, production of nickel hydroxide having a high density, i.e., having a smaller than usual inner pore volume, also results in the production of a large amount of the higher oxide γ-NiOOH. However, the inventors have found that metal ions of different sorts, particularly zinc ions or magnesium ions located in the crystal of the nickel hydroxide can suppress production of γ-NiOOH.

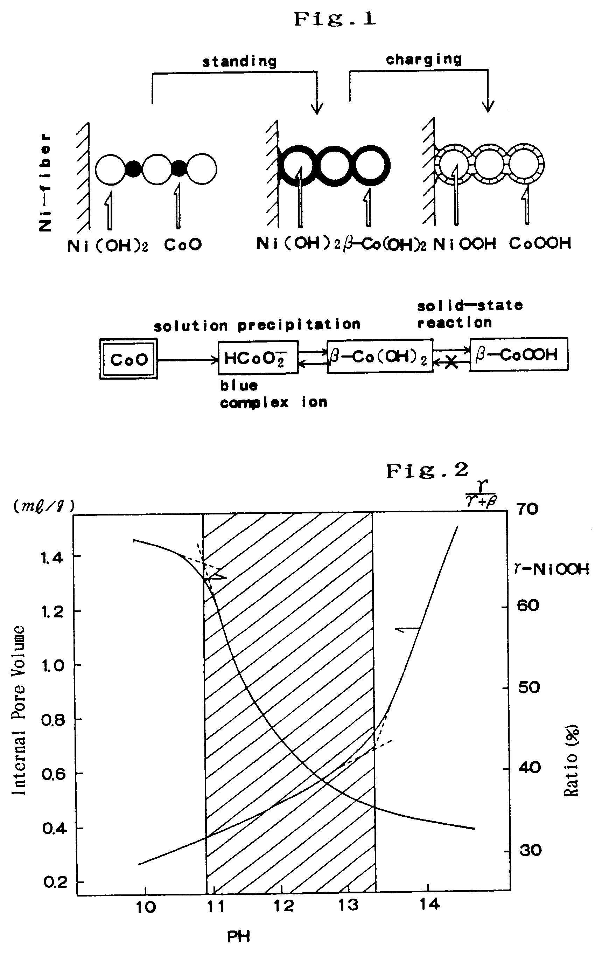

At the outside of the nickel hydroxide, in order to improve the conductivity between the active material particles and the current collector, cobalt compound powder may be applied and dissolved in the battery electrolyte such that it is then deposited between the current collector and the active material particles by virtue of the reaction of HCoO₂- → β-Co(OH)₂ prior to charging. When charged, by virtue of electrochemical oxidation by the reaction β-Co(OH)₂ → CoOOH, it changes into highly conductive cobalt oxyhydroxide, whereby the flow of electrons between the nickel fiber of the current collector and the particles of the nickel hydroxide is enhanced, resulting in increase of the utilization factor. This reaction is illustrated diagrammatically in Figure 1. As shown therein, an important feature is that the material is kept standing after the electrolyte is supplied, and the cobalt compound powder is dissolved so as to interconnect the nickel fiber current collector and the active material.
Figure 1 is a diagram illustrating dissolving of cobalt compound;
Figure 2 is a graph illustrating the relationship between the pH of the deposition solution, particle pore volume and ratio of γ-NiOOH;
Figure 3 is a graph illustrating the relationship between specific surface area and pore volume of nickel hydroxide;
Figure 4 is a graph illustrating pore size distribution of conventional nickel hydroxide powder and of that according to the invention;
Figure 5 is a graph illustrating the relationship between standing conditions and the active material utilization factor;
Figure 6 is a graph illustrating the relationship between various types of nickel hydroxides and the active material utilization;
Figure 7 is a graph illustrating the relationship between the addition ratio of CoO, the active material utilization factor and energy density per volume of a plate;
Figure 8 is a graph illustrating the relationship between the addition ratio of zinc and the ratio of NiOOH;
Figure 9 is a graph illustrating the ratio of γ-NiOOH at the end of discharge for various types of nickel hydroxides;
Figure 10 is a graph comparing discharge voltage characteristics of an electrode including a large amount of γ-NiOOH and that according to the invention;
Figure 11 is a graph illustrating the relationship between the active material, the charge/discharge temperature and active material utilization;
Figure 12 is a diagram illustrating the relationship between various types of cobalt compound additive and active material utilization;
Figure 13 is a graph illustrating pore size distribution of conventional nickel hydroxide powder and of that according to the invention;
Figure 14 shows X-ray diffraction patterns at the end of charging of various types of high density powder to which different proportions of magnesium have been added;
Figure 15 is a diagram illustrating the relationship between the addition ratio of magnesium and the ratio of γ-NiOOH;
Figure 16 is a graph illustrating the ratio of γ-NiOOH at the end of discharge for various types of nickel hydroxide;
Figure 17 is a graph illustrating the relationship between the ratio of γ-NiOOH and the thickness of the electrode when active material including various types of additives are used in the electrodes and they are overcharged;
Figure 18 is a graph of charge potential characteristics of electrodes including various amounts of magnesium additives;

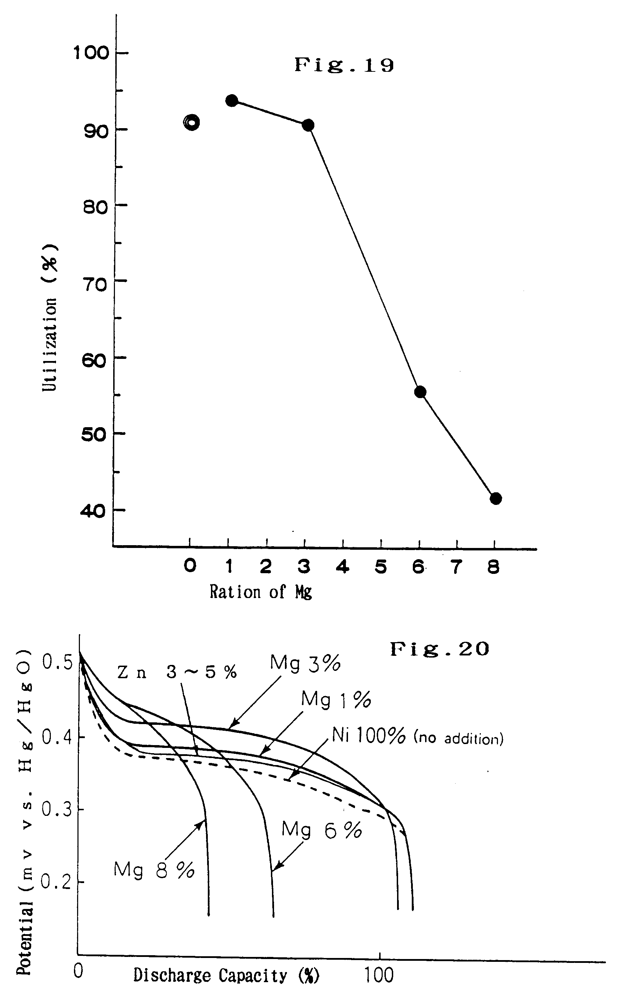

Figure 19 is a graph illustrating the relationship between the magnesium addition ratio and active material utilization; and
Figure 20 is a graph of discharge potential characteristics of electrodes including various amount of magnesium additives.

A first embodiment of the invention will be detailed hereinafter.

Ammonium sulfate is added to aqueous solution of nickel sulfate to which a small amount of zinc sulfate was added to stabilize ions of nickel and zinc as amine complex ions.

This solution is dropped into aqueous sodium hydroxide solution, while rapidly stirring it, to gradually decompose the complex ion and thus deposit and grow nickel hydroxide particles including the zinc in a solid solution state. This deposition is gradually performed in the weak alkaline solution of about pH 11 - 13 and at a temperature of about 40 - 50°C. Depending on the pH of the deposition solution, nickel hydroxide particles having various characteristics can be obtained.

Figure 2 shows the relationship between pore volume of powder consisting of only nickel hydroxide and ratio of γ-NiOOH.

As the pH is lower, the pore volume becomes smaller, and thus the powder has the high density. On the other hand, there is tendency that as the powder is produced at lower pH, more γ-NiOOH is produced. A region satisfying the above two factors is a hatched region between the respective inflection points, which is in a range of about pH 11 - 13.

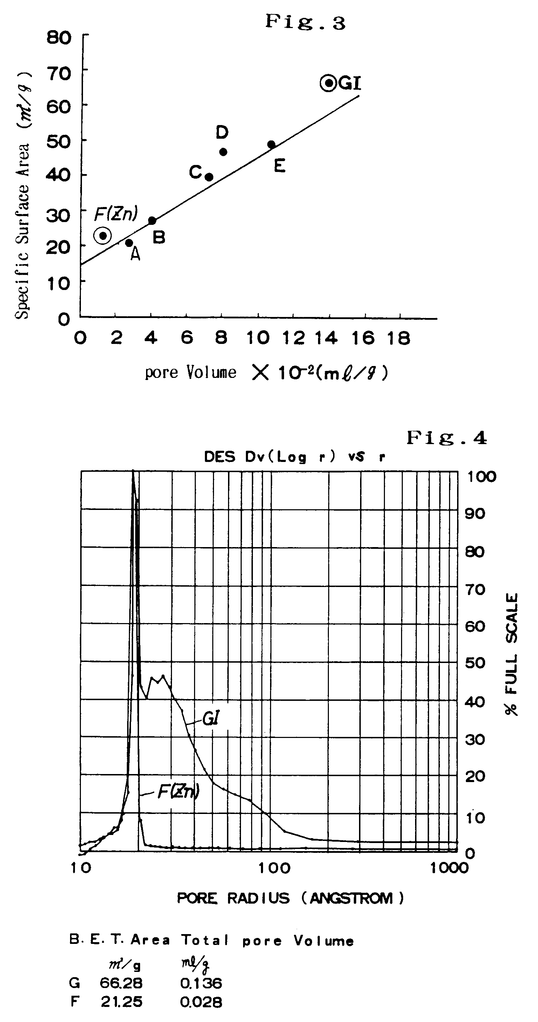

Figure 3 illustrates the relationship between the pore volume and specific surface area. As the pH of the deposition solution is changed, the pore volume of the nickel hydroxide changes, and, at the same time, the specific surface area changes. Specimens A - E consist of only nickel hydroxide, specimen F contains an additive of zinc in solid solution, and specimen G consists of only nickel hydroxide produced by the conventional method wherein nickel hydroxide particles are deposited in aqueous alkaline solution of pH 14 or more, without adding ammonium sulfate.

Each specimen shows random particle deposition and the tendency that the pore volume in the deposit increases in accordance with the increase of specific surface area. Thus, there is correlation between the specific surface area and the pore volume, and, independently of compound, the material having less pore volume and thus high density has less specific surface area.

Figure 4 illustrates dispersion of pore radii in nickel hydroxide produced by the conventional method and in high density nickel hydroxide produced according to the invention, which is obtained from the desorption side of a nitrogen absorption isotherm.

The nickel hydroxide GI produced by the conventional method is deposited by dropping nickel sulfate solution into aqueous sodium hydroxide solution having a pH of 14.5 at a temperature of about 50°C.

In GI there is a wide range of pore radius from 150 - 1000 nm (15 to 100 Å) at the specific surface area of about 65m²/g. The deposit with a pore volume of 0.15 cm³/g (mℓ/g), which is as much as 30% - 40% of the particle volume (0.41 cm³/g (mℓ/g)), has a large void ratio. In contrast to this, the nickel hydroxide F according to the invention has a small pore volume of 0.03 cm³/g (mℓ/g), which is only a quarter of that of deposit GI. This indicates that deposit F(Zn) has a density higher by 20% - 30% than deposit GI. The specific area and the void volume should be as small as possible to obtain active material of suitable high density.

The nickel hydroxide is mixed with a small amount of powder of cobalt compound such as CoO, α-Co(OH)₂, β-Co(OH)₂, or cobalt acetate, which produces Co(II) complex ion when dissolved in alkaline electrolyte. Then, aqueous solution including carboxymethyl-cellulose of 1% is added at a ratio of 30 wt% thereto to produce a flowable paste. A predetermined amount of this paste is loaded into an alkaline-proof metal fiber substrate, e.g., nickel fiber substrate, having porosity of 95%, and a nickel electrode is formed by drying the substrate after the loading.

In order to determine the active material utilization factor as well as the ratio of γ-NiOOH at charge and discharge, a battery is assembled, in which this nickel electrode and a cadmium electrode are used with a non-woven cloth polypropylene separator therebetween, and potassium aqueous electrolyte having a specific gravity of 1.27 is added thereto. After adding the electrolyte, the battery is kept standing, without supplying the electric current, at the corrosion potential of the mixed cobalt compound, and interconnection is established in the nickel hydroxide powder by β-Co(OH)₂.

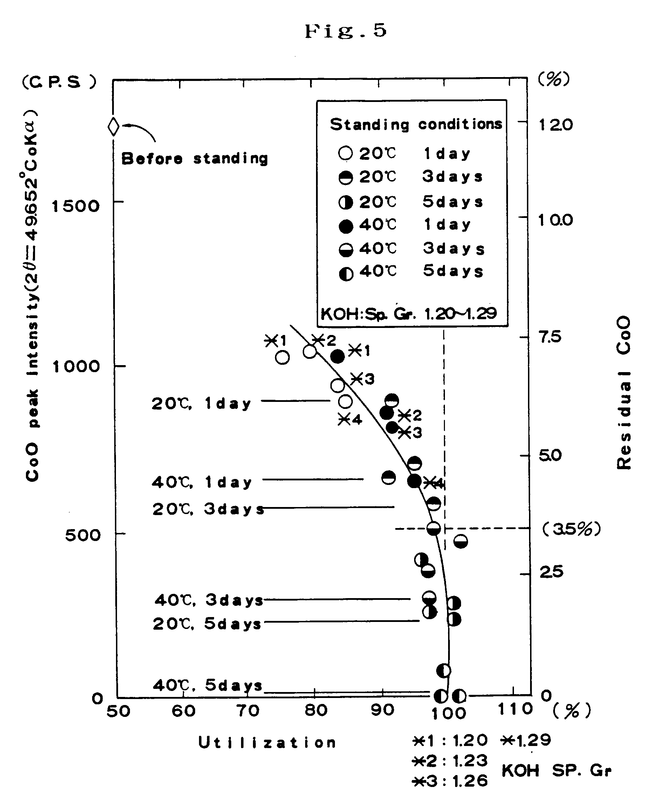

Figure 5 illustrates the relationship between the standing conditions of the nickel electrode and the active material utilization in a battery which includes nickel hydroxide having a specific surface area of 65 m²/g and CoO as the additive. With respect to the reason for standing, which is to allow time for the formation of the important conductive network, it can be seen that high utilization can be obtained in a shorter period as the concentration of the electrolyte and the temperature increase. It can also be seen that the amount of the dissolved CoO also decreases. This is due to the formation of the network.

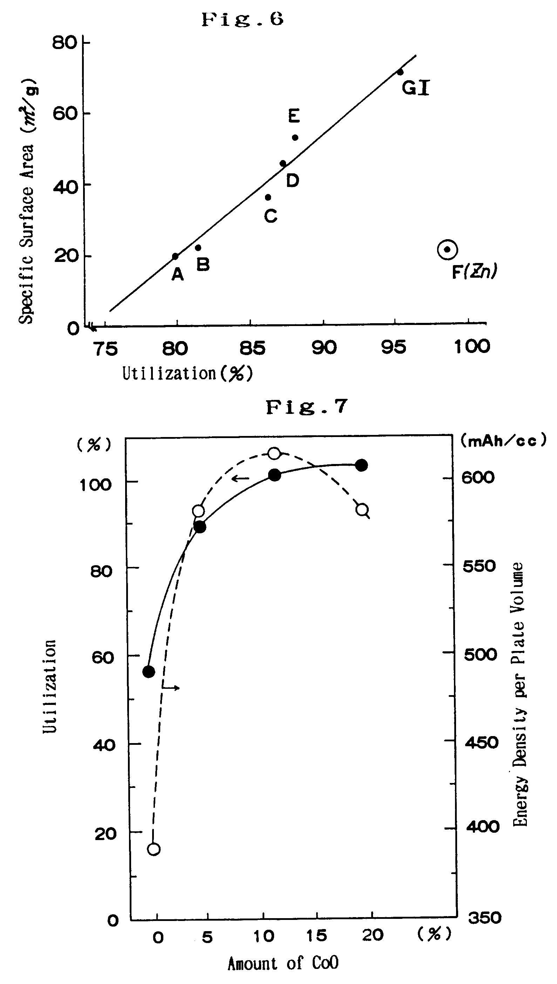

Figure 6 shows the relationship between various specimens of nickel hydroxide and utilization of the active material under the appropriate standing condition. Active material consisting of only nickel hydroxide exhibits a proportional relationship between specific surface area and active material utilization. This shows that high or large specific surface area is required for high active material utilization. This means that low density active material having a large pore volume is preferable, so it is impossible to increase the energy density of the electrode. However, the specimen F(Zn) which includes a small amount of zinc added into the crystal of the nickel hydroxide exhibits a high utilization which is substantially the same as that of the conventional powder GI in spite of the fact that it has a much smaller specific surface area. The energy density per unit volume of the plate is 504mAh/cm³ in the conventional powder GI, and 620 mAh/cm³ in the high density powder F(Zn), which is higher by 20 % than the conventional powder GI. Thus, a larger amount of high density powder can be loaded into a substrate of fixed volume, as compared with the conventional powder.

Since the active material utilization factor is close to the theoretical value, the pore volume of the high density active material powder at the time of paste loading, which is required for satisfying the energy density of 600 mAh/cm³, must be 0.05 cm³/g (mℓ/g) or less. This effect, brought about by the addition of zinc, can be inferred to be caused by the form of the crystal of the nickel oxyhydroxide, because a large amount of γ-NiOOH having low reversibility is produced when the material has low utilization and a smaller amount of γ-NiOOH is produced when the zinc is added.

For the reaction of the active material, it is necessary to permit smooth movement of electrons from the current collector to the surfaces of the active material particles, and it is beneficial to form a network of conductive CoOOH particles on the metalhydroxide particle surfaces without being solid-solved in the nickel hydroxide, as described before. With respect to the CoO additive forming this network, if the amount thereof is increased, the active material utilization rate increases. However, although more additive can establish a more perfect network, there is a tendency that the energy density of the plate decreases after a value of about 15%, because the additive itself contributes only to conductivity, and is neither practically charged nor discharged.

Correlation between the composition of the nickel hydroxide powder and the ratio of γ-NiOOH is inspected by X-ray analysis of the plate at the end of charging, which has been performed at high current density of 1C.

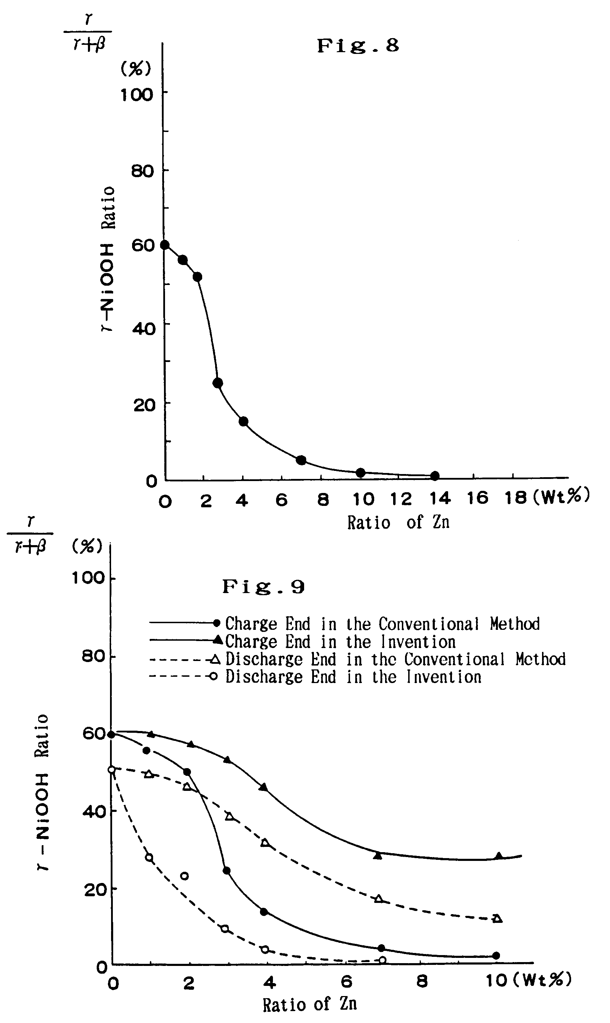

From Figure 8, it can be seen that when zinc (or magnesium) is present in solid solution in the crystals of nickel hydroxide, the ratio of γ-NiOOH decreases in proportion to the amount of Zn or Mg added.

Although γ-Ni00H can be more effectively suppressed when the addition ratio is increased, an excessively large ratio causes isolation, resulting in reduction of the utilization factor.

Isolated zinc hydroxide exists, and a mixture of dissolved zinc complex ion and cobalt complex ion is deposited in the course of dissolving and re-depositing of the cobalt oxide additive, which reduces the conductivity, and thus the utilization. If the zinc is added at a ratio of 10 wt% or more, it is not solid-solved.

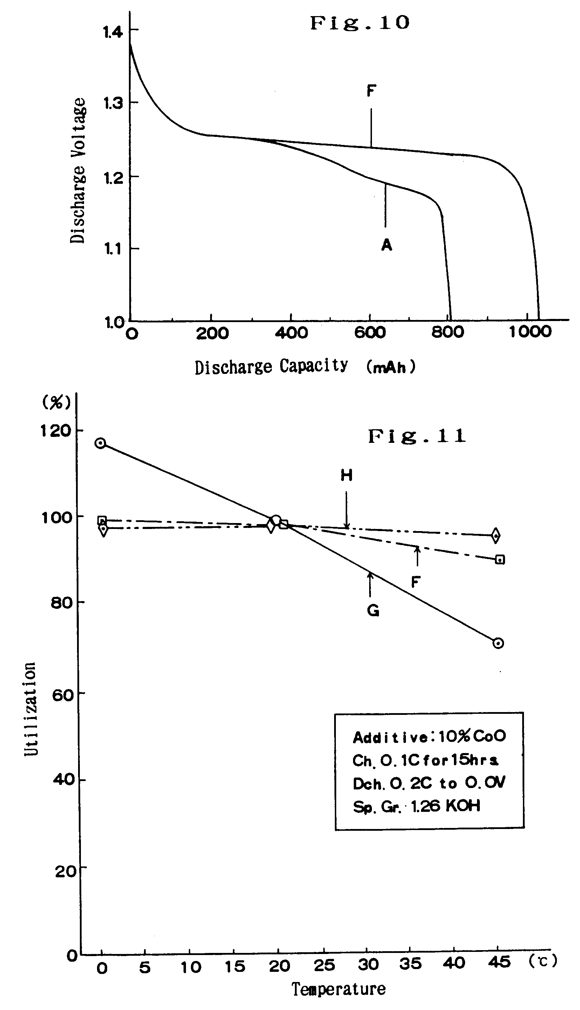

High density powder A without zinc is shown in Figure 10 to have a discharge voltage different from that of high density powder F(Zn), due to production of a large amount of γ-NiOOH. As shown in Figure 8, the effect of significantly reducing production of γ-NiOOH is achieved by the addition of zinc at a ratio of 3% or more, and production of γ-NiOOH is completely extinguished at an addition ratio of 10%.

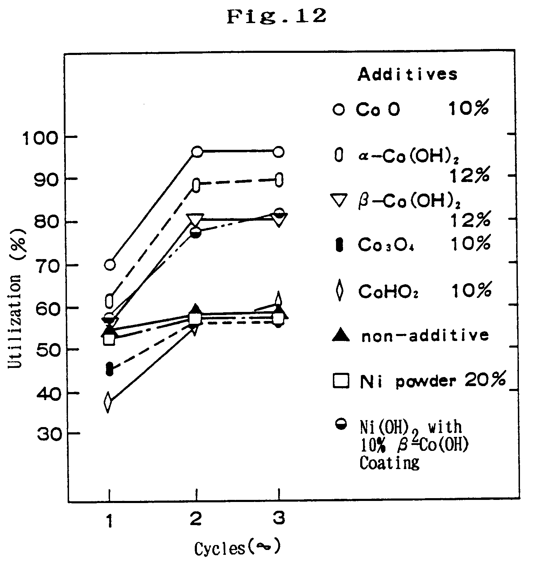

This effect of zinc is maintained even if another element, e.g., cobalt, coexists in the solid solution. Figure 11 illustrates the relationship between the active material, charge-discharge temperature and active material utilization. In the material H, in which both the zinc and cobalt are present in the solid solution, there is another advantage that the charge performance is improved at a high temperature of about 45°C, as compared with material F(Zn) including only zinc.

Figure 12 illustrates the relationship of the active material utilization with respect to the additives for forming the network of CoOOH. The reason that the order of the active material utilization is CoO > α-Co(OH)₂ > β-Co(OH)₂ is considered to be based on the solubility in the electrolyte. That is; β-Co(OH)₂ is prone to be oxidized by the oxygen dissolved in the supplied electrolyte into brown Co(OH)₃ having low solubility. On the other hand, with respect to α-Co(OH)₂, it changes through β-Co(OH)₂, i.e., α-Co(OH)₂ → β-Co(OH)₂), so that Co(HO)₃ is less prone to be produced. With respect to CoO, Co(OH)₃ is not produced at all, and thus is considered to be the most superior additive. Specifically, in view of the speed of solution, it is desirable to form an additive having low crystallinity using β-Co(OH)₂ as starting material which is heated and formed in hot inert atmosphere at a temperature between 200°C and 800°C.

An electrode having paste loaded therein which is formed by immersing the nickel hydroxide powder in HCoO₂ ion to form the cobalt hydroxide layer on the surfaces of the Ni-hydroxide particles, has a utilization which is less than that of an electrode including CoO powder mixed therein and is nearly same as that of an electrode including β-Co(OH)₂ powder mixed therein.

Utilization was also investigated in another electrode. This electrode included powder which formed a conductive CoOOH layer on the surface of the oxyhydroxide powder, which was specifically formed by removing nickel fiber, i.e., current collector, from an electrode including the CoO powder mixed therein after charging and discharging it. This powder was re-loaded therein in the form of paste. This electrode was found to have low utilization. This indicates that it is essential that the conductive network (CoOOH) between the active material and the current collector is formed in the manufactured electrode. If the CoOOH layer is pre-formed on the surfaces of the active material particles, a perfect network can not be established. Therefore, it is necessary to allow a period of standing to achieve dissolving and re-deposition of the CoO powder after the assembly of the electrode in the battery.

In an electrode manufactured in accordance with the invention, using CoO additive, utilization can be increased to a high value close to the theoretical value by the dissolving and re-deposition process, without using additional conductive material, so that conductive additive is unnecessary. As a result, formation of carbonate, which may be caused due to oxidation decomposition, can be prevented, and this can be especially beneficial when used in an electrode for a sealed nickel cadmium battery.

A second embodiment of the invention will be detailed hereinafter.

Ammonium sulfate is added to aqueous solution of nickel sulfate to which a small amount of magnesium sulfate was added to produce amine complex ions of nickel and magnesium.

This solution is dropped into aqueous sodium hydroxide solution, while rapidly stirring it, to gradually decompose the complex ion and thus deposit and grow nickel hydroxide particles including the magnesium in a solid solution state. This deposition is gradually performed in the weak alkaline solution of about pH 11 - 13 and at a temperature of about 40 - 50°C. Depending on the pH of the deposition solution, nickel hydroxide particles having various characteristics can be obtained.

The characteristics of this nickel hydroxide are the same or similar to those previously described with reference to Figures 2 and 3.

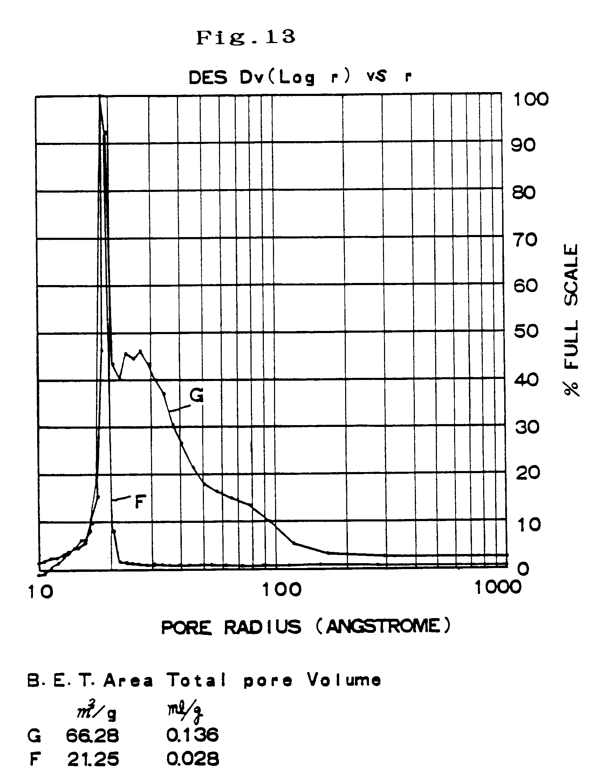

Figure 13 illustrates dispersion of pore radii in nickel hydroxide produced by the conventional method and in high density active material, i.e. nickel hydroxide, including magnesium added thereto according to the invention for comparison of the two.

The nickel hydroxide GII produced by the conventional method is deposited by dropping nickel sulfate solution into alkaline solution having a pH of 14.5 at a temperature of about 50°C.

In GII there is a wide range of the pore radius from 150 to 1000 nm (15 - 100 Å) at the specific surface area of about 66m²/g. The deposit with a pore volume of 0.136 cm³/ℓ (mℓ/g), which is as much as 30% - 40% of the particle volume (0.41 cm³/g (mℓ/g)), has a large void ratio. In contrast to this, the nickel hydroxide F(Mg) according to the invention has a small pore volume of 0.028 cm³/g (mℓ/g), which is only a quarter of that of deposit GII.

The nickel hydroxide is mixed with a small amount of powder of cobalt compound such as CoO, α-Co(OH)₂, β-Co(OH)₂, or cobalt acetate as is done in the embodiment previously described, which produces Co(II) complex ion when dissolved in alkaline electrolyte. Then, aqueous solution including carboxymethyl-cellulose of 1% is added thereto to produce a flowable paste. A predetermined amount of this paste is loaded into an alkaline-proof metal fiber substrate, e.g., a nickel fiber substrate, having porosity of 95%, and a nickel electrode is formed by drying the substrate after the loading.

In order to determine the active material utilization as well as the ratio of γ-NiOOH at charge and discharge, a battery is assembled, in which this nickel electrode is used as a counter electrode to a cadmium electrode with a non-woven cloth polypropylene separator therebetween. The utilization of this battery has been investigated under conditions which are same as those previously described with reference to Figures 5 and 6, and the same results as those shown in Figures 5 and 6 were obtained.

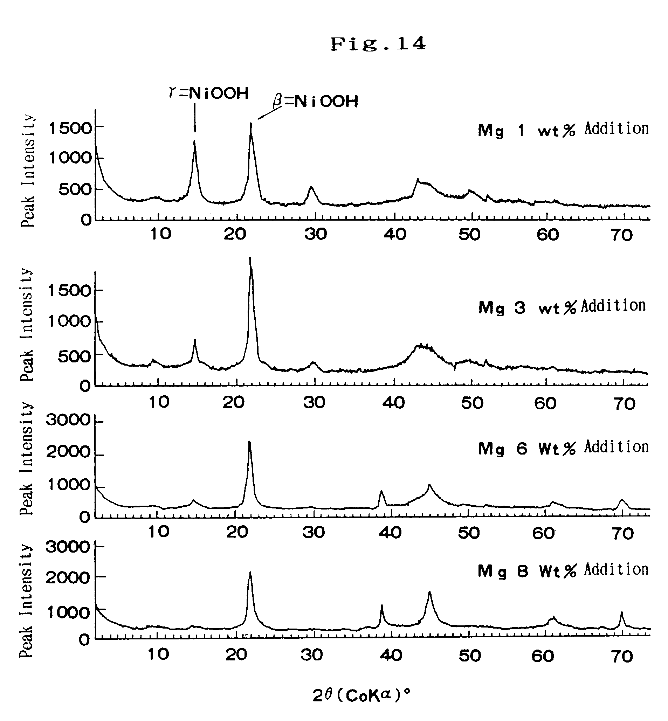

Correlation between the various specimens of nickel hydroxide and the ratio of γ-NiOOH is inspected by X-ray analysis of the plate at the end of charging, which has been performed at a high current density of 1C. The X-ray analysis is illustrated in Figure 14.

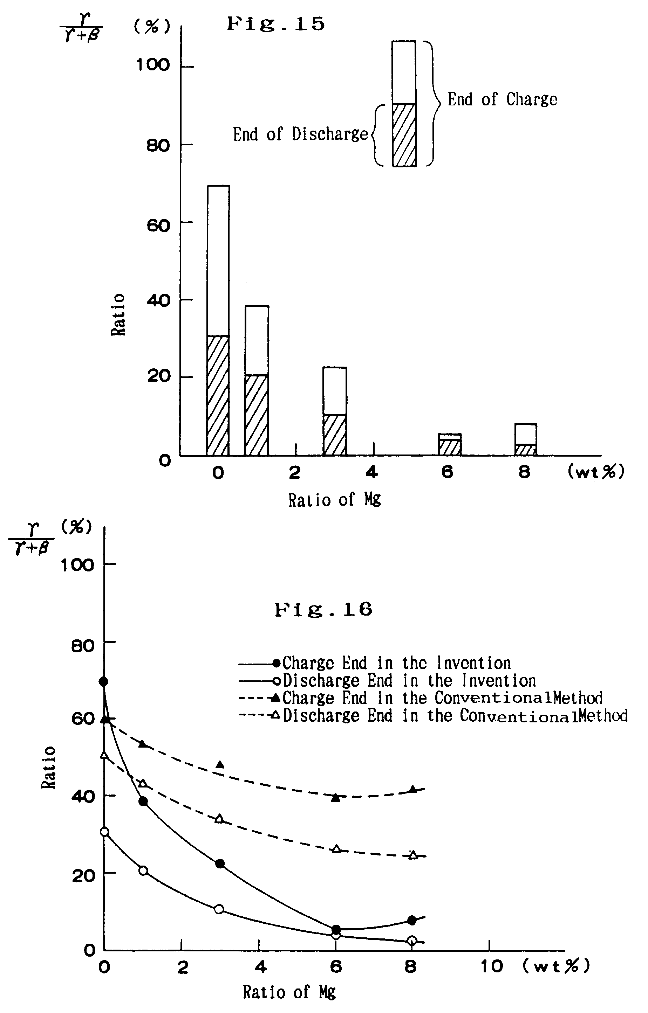

As shown in Figure 15, when magnesium in solid solution is included in the crystals of the nickel hydroxide, the ratio of γ-NiOOH decreases as the amount of Mg increases.

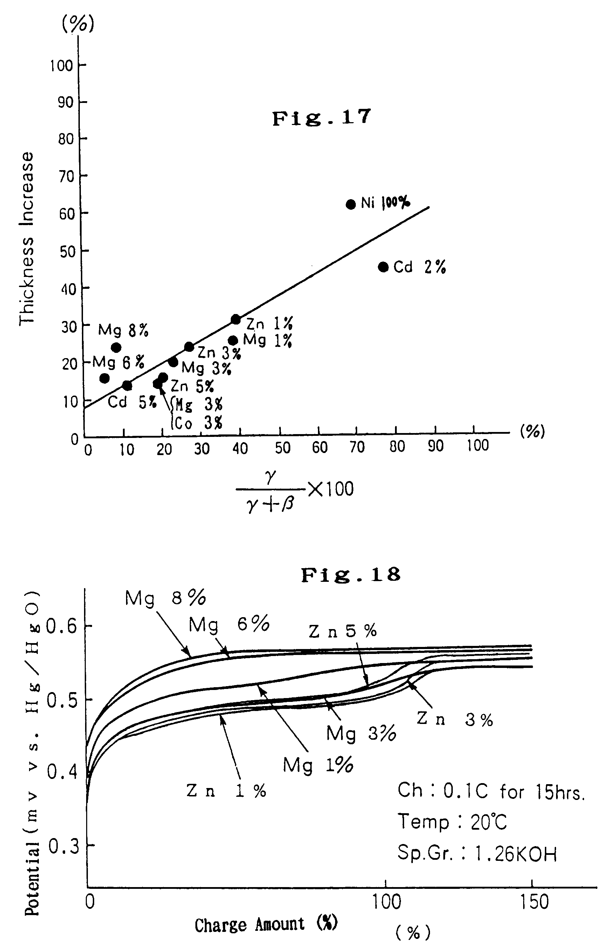

Figure 17 shows the relationship between the ratio of γ-NiOOH in the overcharged condition and the thickness of the electrode. As the ratio of γ-NiOOH increases, the thickness of the electrode increases. Thus, in order to obtain an electrode having a long useful life, it is necessary to suppress the formation of γ-NiOOH. The addition of the magnesium effects this suppression.

A feature of having magnesium in solid solution is that the discharge potential is increased to a large extent as shown in Figure 20. There is a tendency for the the potential to increase as the addition ratio increases. On the other hand, as shown in the Figure 8, the charge potential causes a competitive reaction of oxidation of the active material and the evolution of oxygen, resulting in reduction of the capacity, as shown in Figure 20, so that excessive addition will cause disadvantage. This adverse reaction is minimised in a range of 1 - 3 wt%. It is considered that the addition of the magnesium causes distorsion in the nickel hydroxide crystal, by which the smooth diffusion of protons into the solid phase can be achieved.

This effect of the magnesium is maintained even if another element, e.g., cobalt, coexists in the solid solution, as is previously described with reference to Figure 11.

Also, although metal fiber sintered material is used as the substrate in this second embodiment, various other materials may also be used. The effect obtained by the addition of magnesium can also be obtained in nickel hydroxide having high crystallinity which is formed by various other methods.

As described hereinabove, according to the invention, the density of nickel hydroxide is increased, and the formation of γ-NiOOH, which may be caused by the increase of density, is minimised by an additive (Zn or Mg) having low toxicity. Therefore, the present invention provides an active material for a nickel electrode as well as a nickel electrode using it, which has a long useful life and high utilization of the active material, and an alkaline battery employing same, and thus the invention has high industrial value.

## Claims

1. A nickel electrode including active material comprising nickel hydroxide powder with zinc or magnesium in solid solution in crystals of said nickel hydroxide, the zinc or magnesium being present in the range of 3 to 10 wt% or 1 to 3 wt%, respectively, and the pore size within the powder being no greater than 3nm in radius and the total pore volume, when calculated from a desorption side of the nitrogen adsorption isotherm, being less than 0.05 cm³/g.

2. A method of producing active material for the nickel electrode according to claim 1 by deposition of crystals of nickel hydroxide including a small amount of zinc or magnesium in solid solution therein from an aqueous sulphate solution thereof to which ammonium sulphate has been added following addition of sodium or potassium hydroxide thereto to bring the pH to between 11 and 13.

3. A nickel electrode comprising a porous alkaline-proof metal substrate used as a current collector and a paste, which is loaded into the electrode, a principle component of the paste being active material according to claim 1.

4. A nickel electrode according to claim 3 wherein a small amount of cobalt exists in solid solution in the active material in addition to the zinc or magnesium.

5. A nickel electrode according to claim 3 or 4 wherein divalent cobalt compound, which forms cobalt complex ion when dissolved in alkaline aqueous solution, is added to the active material powder in a range of 5 to 15 wt%.

6. A nickel electrode as claimed in claim 5 wherein conductive additives are not included, and the conductivity between the metal substrate and particles of the active material is substantially maintained only by virtue of the cobalt compound additive.

7. Use of a nickel electrode as claimed in claim 5 or 6 in an alkaline battery which is maintained under standing condition one or more days after supplying electrolyte thereto, and initially charged only after the cobalt compound additive is completely dissolved and deposited.

## Patentansprüche

1. Nickel-Elektrode, enthaltend ein aktives Material, das Nickelhydroxid-Pulver mit Zink oder Magnesium in fester Lösung in Kristallen des Nickelhydroxids umfaßt, wobei das Zink oder Magnesium im Bereich von 3 bis 10 Gew.-% bzw. von 1 bis 3 Gew.-% vorhanden ist und wobei die Poren-Größe in dem Pulver nicht größer als 3 nm, als Radius, ist und das gesamte Poren-Volumen, berechnet von der Seite der Desorption der Stickstoff-Adsorptions-Isotherme, kleiner als 0,05 cm³/g ist.

2. Verfahren zur Herstellung des aktiven Materials für die Nickel-Elektrode nach Anspruch 1 durch Abscheidung von Nickelhydroxid-Kristallen, die eine kleine Menge Zink oder Magnesium in fester Lösung darin enthalten, aus einer wäßrigen Sulfat-Lösung desselben, der Ammoniumsulfat zugesetzt wurde, wonach der Zusatz von Natrium- oder Kaliumhydroxid erfolgt, um den pH auf einen Wert zwischen 11 und 13 zu bringen.

3. Nickel-Elektrode, umfassend ein poröses, alkalifestes Metall-Substrat, das als Strom-Sammler dient, und eine Paste, die in die Elektrode gefüllt wird, wobei eine Haupt-Komponente der Paste das aktive Material nach Anspruch 1 ist.

4. Nickel-Elektrode nach Anspruch 3, worin eine kleine Menge Cobalt in fester Lösung in dem aktiven Material zusätzlich zu dem Zink oder Magnesium vorkommt.

5. Nickel-Elektrode nach Anspruch 3 oder 4, worin eine Verbindung des zweiwertigen Cobalts, die beim Auflösen in alkalisch-wäßriger Lösung einen Cobalt-Komplex bildet, zu dem Pulver des aktiven Materials in einer Menge im Bereich von 5 bis 15 Gew.-% hinzugefügt worden ist.

6. Nickel-Elektrode nach Anspruch 5, worin leitfähige Additive nicht enthalten sind und die Leitfähigkeit zwischen dem Metall-Substrat und den Teilchen des aktiven Materials im wesentlichen nur aufgrund des Zusatzes der Cobalt-Verbindung aufrechterhalten wird.

7. Verwendung einer Nickel-Elektrode nach Anspruch 5 oder 6 in einer alkalischen Batterie, die nach dem Einbringen des Elektrolyten in diese einen oder mehrere Tage stehen gelassen wird und erst dann erstmalig geladen wird, nachdem die zugesetzte Cobalt-Verbindung sich vollständig gelöst und niedergeschlagen hat.

## Revendications

1. Électrode au nickel incluant une matière active comprenant une poudre d'hydroxyde de nickel avec du zinc ou du magnésium en solution solide dans les cristaux dudit hydroxyde de nickel, le zinc ou le magnésium étant présent dans l'intervalle de 3 à 10 % en poids ou de 1 à 3 % en poids, respectivement, et la taille des pores au sein de la poudre, exprimée en rayon, étant d'au plus 3 nm, et le volume poreux total, calculé d'après le côté de désorption de l'isotherme d'adsorption d'azote, étant inférieur à 0,05 cm³/g.

2. Procédé de production d'une matière active pour l'électrode au nickel selon la revendication 1, par dépôt de cristaux d'hydroxyde de nickel contenant une petite quantité de zinc ou de magnésium en solution solide à partir d'une solution aqueuse de leurs sulfates à laquelle on a ajouté du sulfate d'ammonium, et ajouté ensuite de l'hydroxyde de sodium ou de potassium pour porter le pH entre 11 et 13.

3. Électrode au nickel comprenant un substrat métallique poreux résistant aux alcalis utilisé comme collecteur de courant et une pâte dont est chargée l'électrode, un constituant principal de la pâte étant une matière active selon la revendication 1.

4. Électrode au nickel selon la revendication 3, dans laquelle une petite quantité de cobalt existe en solution solide dans la matière active en plus du zinc ou du magnésium.

5. Électrode au nickel selon la revendication 3 ou 4, dans laquelle un composé de cobalt divalent, qui forme un ion complexe de cobalt lorsqu'il est dissous dans une solution aqueuse alcaline, est ajouté à la poudre de matière active dans un intervalle de 5 à 15 % en poids.

6. Électrode au nickel telle que revendiquée dans la revendication 5, dans laquelle des additifs conducteurs ne sont pas inclus, et la conductivité entre le substrat métallique et les particules de la matière active n'est maintenue sensiblement que grâce au composé de cobalt utilisé comme additif.

7. Utilisation d'une électrode au nickel telle que revendiquée dans la revendication 5 ou 6 dans un accumulateur alcalin qui est maintenu à l'état de repos un ou plusieurs jours après que l'électrolyte y a été introduit, et n'est chargé initialement qu'après que le composé de cobalt utilisé comme additif a été totalement dissous et déposé.
